# EUROPEAN PATENT APPLICATION

(11) **EP 3 882 798 A1**
(43) Date of publication of application: **22.09.2021**
(21) Application number: 20164586.8
(22) Date of filing: 20.03.2020
(51) Int. Cl.: G06F 21/55, G06F 21/71, G06F 21/79

(54) **METHOD FOR SECURELY ACCESSING A MEMORY COMPONENT**

(71) Applicant: THALES DIS DESIGN SERVICES SAS, 13590 Meyreuil (FR)
(72) Inventor: POMET, Alain, 13881 GEMENOS Cedex (FR); COULON, Jean-Roch, 13881 GEMENOS Cedex (FR)
(74) Representative: Grevin, Emmanuel

(57) **Abstract**

Method for securely accessing a memory (20), coupled to an interface component (10) which is adapted to provide a processing device (30) with access to the memory. The processing device sends to the interface component a request to read a first data stored in the memory. The interface component performs two identical read accesses in the memory for retrieving the first data and performs in the memory a third access to a second data distinct from the first data, said third access being interleaved between said two read accesses. The interface component compares the two values retrieved by the two read accesses and raises an alarm if said two values are different.

## Description

### (Field of the invention)

The present invention relates to methods for securely accessing a memory component. It relates particularly to methods for accessing a memory from a processing unit external to the memory.

### (Background of the invention)

A memory read access can easily be corrupted by fault injection for instance using a laser, electromagnetic means or photoemission. In such a case, the value of the accessed memory data can be modified. This is a way for an attacker to start a combined attack. It is possible to execute another instruction, to use modified operands allowing to access illegally to sensitive information or to jump to unverified code for example.

There is a need for enhancing security when accessing a memory component.

### (Summary of the Invention)

The invention aims at solving the above mentioned technical problem.

An object of the present invention is a method for securely accessing a memory coupled to an interface component which is adapted to provide a processing device with access to the memory. The method comprises a step in which the processing device sends to the interface component a request to read a first data stored in the memory. The method comprises a step in which the interface component performs two identical read accesses in the memory for retrieving the first data and performs in the memory a third access to a second data distinct from the first data, said third access being interleaved between said two read accesses. The method comprises a step in which the interface component compares the two values retrieved by said two read accesses and raises an alarm if said two values are different.

Advantageously, the third access may be a read memory access or a write memory access.

Advantageously, said third access may be a read access which is triggered by the receipt by the interface component of a second request sent by the processing device, said second request aiming at reading said second data stored in the memory.

Advantageously, the interface component may perform in the memory a fourth access to a third data distinct from the first data, said fourth access being interleaved between said two read accesses.

Advantageously, the interface component may comprise a storage area and may record in the storage area a pair comprising the address of the first data and the value retrieved by the first read access performed for getting said first data.

Advantageously, the storage area may comprise several sequentially stored pairs and, when the storage area becomes unable to store an additional pair, the interface component may automatically perform an access to the memory using the address comprised in the oldest pair, remove said oldest pair from the storage area and store the additional pair in the storage area.

Advantageously, the storage area may comprise several sequentially stored pairs and, when the storage area becomes unable to store an additional pair, the interface component may automatically remove the oldest pair from the storage area without accessing the memory a second time using the address comprised in said oldest pair and store the additional pair in the storage area.

Advantageously, the interface component may identify a configuration data which depends on the processing device, the interface component may check whether the configuration data satisfies a preset rule and the interface component may perform the step of two identical read accesses for retrieving the first data only if the configuration data satisfies the preset rule.

An object of the present invention is a device comprising a memory, a processing device and an interface component which is coupled to the memory and adapted to provide the processing device with access to the memory. Upon receipt of a request to read a first data stored in the memory from the processing device, the interface component is configured to perform two identical read accesses in the memory for retrieving the first data and to perform in the memory a third access to a second data distinct from the first data, said third access being interleaved between said two read accesses. The interface component is configured to compare the two values retrieved by said two read accesses and to raise an alarm if said two values are different.

Advantageously, the third access may be a read access which is triggered by the receipt by the interface component of a second request sent by the processing device, said second request aiming at reading said second data stored in the memory.

Advantageously, the interface component may comprise a storage area and may be adapted to record in the storage area a pair comprising the address of the first data and the value retrieved by the first read access performed to get the first data.

Advantageously, the storage area may comprise several sequentially stored pairs and, when the storage area becomes unable to store an additional pair, the interface component may be configured to automatically perform an access to the memory using the address comprised in the oldest pair, to remove said oldest pair from the storage area and to store the additional pair in the storage area.

Advantageously, the storage area may comprise several sequentially stored pairs and, when the storage area is unable to store an additional pair, the interface component may be configured to automatically remove the oldest pair from the storage area without accessing the memory a second time using the address comprised in said oldest pair and to store the additional pair in the storage area.

Advantageously, the interface component may be configured to identify a configuration data which depends on the processing device, the interface component may be configured to check whether the configuration data satisfies a preset rule and the interface component may be configured to perform the two identical read accesses for retrieving the first data only if the configuration data satisfies the preset rule.

Advantageously, the processing device may comprise several hardware components which are configured to access the memory through the interface component independently of each other.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a first example of architecture of system allowing to secure accesses to a memory according to an embodiment of the invention;
- Figure 2 depicts a first example of data accesses in relation to cycles according to an embodiment of the invention;
- Figure 3 shows a flow diagram for accessing a memory according to a first example of the invention;
- Figure 4 shows a flow diagram for accessing a memory according to a second example of the invention; and
- Figure 5 depicts schematically a second example of architecture of system allowing to secure accesses to a memory according to an embodiment of the invention.

### (Detailed description of the preferred embodiments)

The invention may apply to any type of conventional memory.

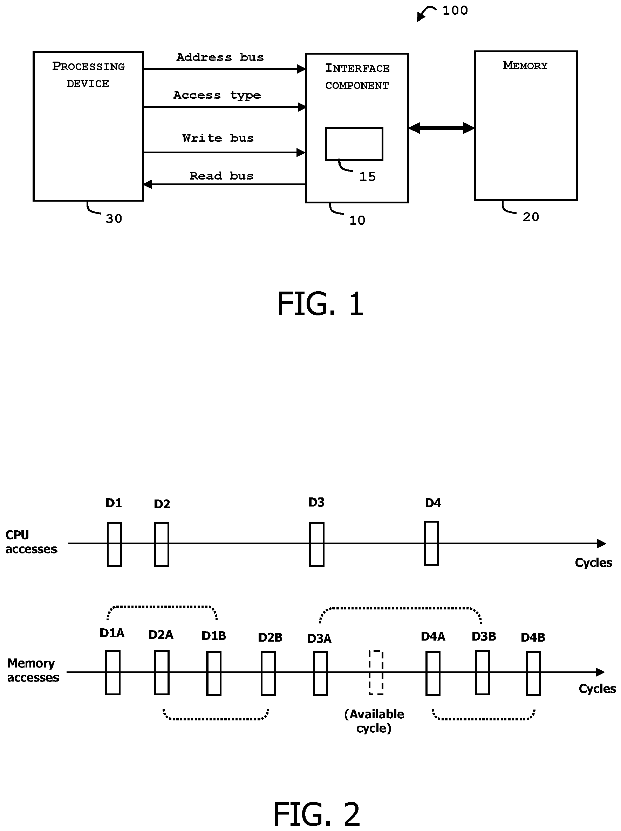

Figure 1 shows schematically a first example of architecture of a system 100 allowing to secure accesses to a memory according to an embodiment of the invention.

In this example, a processing device 30 is intended to access the memory 20 for reading or writing data. The system 100 comprises an interface component 10 which is coupled to the memory 20 and adapted to provide the processing device 30 with access to the memory 20. In other words, the processing device 30 does not directly access the memory 20 but indirectly accesses the memory 20 through the interface component 10. Preferably, only the interface component 10 can directly access the memory 20.

In the example of Figure 1, the processing device may be a CPU (Central Processing Unit).

The processing device may also be a hardware automate also known as FSM (Finite State Machine).

In other embodiments, the processing device may comprises several hardware components which are configured to access the memory through the interface component independently of each other. For instance, the processing device may be a combination of a plurality of independents CPUs.

The memory 20 may comprise one or several hardware elements designed to record data. For instance, the memory may be a RAM, EEPROM or a flash non-volatile memory.

The interface component 10 is a hardware component which can be fully hardcoded or a combination of hardware and firmware elements. Thus the interface component can operate with a high time performance.

When the processing device needs to retrieve a target data stored in the memory, it sends, to the interface component, a request to read the target data. Upon receipt of this request, the interface component 10 is designed to perform two identical read accesses in the memory 20 for retrieving the target data and to perform in the memory 20 a third access to another data distinct from the target data, said third memory access being interleaved between the two read accesses.

The memory accesses (read/write) performed by the interface component are conventional accesses (read/write) to the memory.

The interface component 10 is designed to compare the two values retrieved by the two read accesses (of the target data) and to raise an alarm if the two retrieved values are different.

The third access may be a read memory access or a write memory access. For example, the third access can be a read access which is triggered by the receipt by the interface component of a second request (sent by the processing device) which aims at reading in the memory 20 a data distinct from the target data. In another example, the third access can be a write access which is triggered by the receipt by the interface component of a writing request (sent by the processing device) which aims at writing in the memory 20 a data distinct from the target data.

The interface component may detect it received request for writing a data just after it received a request for reading the same data and discard the double read checking. (Since the second memory read may provide a value modified compared to the first memory read.) Such an embodiment may be useful when handling a volatile memory like a RAM.

It is to be noted that the time between the reception of the request that triggers the first read of the target data in the memory and the reception of the request that triggers the third access to the memory may be variable. Thus the second read access to the memory for reading the target data can be delayed in time compared to the first read access to the memory for reading the target data.

In practice, the flow of requests sent by the processing device is dense. The frequency of the requests and their large number allow to carry out the second read memory access quickly while minimizing downtime.

Advantageously, the interface component 10 comprises a storage area 15 and is adapted to record in the storage area 15 a pair comprising the address of the target data (in the memory) and the value retrieved by the first read access performed to get the target data. Once the interface component 10 has performed the second read access associated to the target data, it can compare the second value with the corresponding value previously stored in the storage area 15 and raise an alarm if the two values are different.

Preferably, the interface component 10 may be designed to manage the storage area 15 as a FIFO (First In First Out).

The storage area 15 may be a memory component or a set of registers.

The storage area may comprise several pairs which have been sequentially stored.

In one embodiment, as soon as the storage area becomes unable to store an additional pair (because it is full and a new memory access has been received by the interface component 10), the interface component can be designed to automatically perform an access to the memory 20 using the address comprised in the oldest pair, to remove the oldest pair from the storage area 15 and to store the additional pair in the storage area 15. In such case, the access to the memory 20 (with the address coming from the oldest pair) is followed by a comparison between the value newly retrieved from the memory and the value coming from the oldest pair and an alarm is raised if those two values are different. This implementation allows to force the double read access for the oldest pair while keeping a good security level.

The interface component 10 may be designed to generate an access to the memory 20 without corresponding request received from the processing device 30 in order to performed interleaved memory accesses. For instance the interface component 10 may be designed to detect that the storage area 15 is full and triggers the generation of a supernumerary access to the memory 20 in order to perform the second access to the memory 20 with the address coming from the oldest pair. In other words, the interface component 10 may be designed to generate a fake access to the memory in order to be able to perform the second interleaved read access to the memory for a target data. For instance, a fake access to the memory may be automatically generated if no new request has been received by the interface component after a predefined duration.

In one embodiment, as soon as the storage area becomes unable to store an additional pair (because it is full and a new memory access has been received by the interface component 10), the interface component can be designed to automatically remove the oldest pair from the storage area without accessing the memory a second time using the address comprised in the oldest pair and to store the newly received (i.e. additional pair) in the storage area 15. Such an embodiment allows a good time performance.

The interface component can manage access to several independent memories. Advantageously, the interface component may comprise as many storage areas as managed memories.

The interface component may be designed to execute more than one memory access between two identical memory access aiming at read the same data.

The interface component may execute more than two interleaved memory read for a same target data. For instance, the interface component may execute three identical interleaved memory access to read the same data and raise an alarm is the three retrieved values are not equal.

In one embodiment, the interface component may be designed to identify a configuration data which depends on the processing device 30 and to check whether the identified configuration data satisfies a preset rule. The interface component may be designed to perform the two identical read accesses for retrieving a target data only if the configuration data satisfies the preset rule. Thus the double read operation can be conditioned by criteria allowing to adapt the behavior of the system 100 according to security constraints. The preset rule is assumed to be pre-stored in the interface component and reflects the activation/deactivation of the double read mechanism.

In one example, the processing device may provide the configuration data in a message containing the read memory request. By analyzing the received message, the interface component may enable or disable the double interleaved read mechanism according to the retrieved configuration data. In such an example, the processing device is adapted to provide the relevant configuration data for each read memory request. For instance, the processing device may select the configuration data according to the sensitivity or nature of the data to be read.

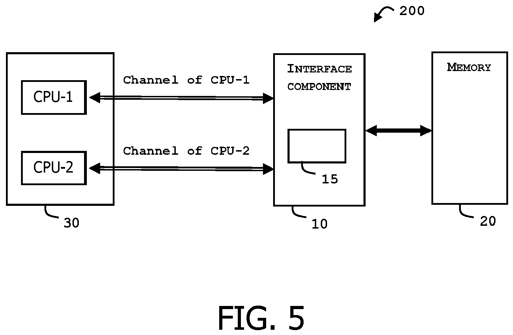

In another example shown at Figure 5, the processing device may comprise two CPUs and the interface component can be designed to automatically apply the double interleaved read mechanism for all read requests coming from one CPU and not apply the double interleaved read mechanism for the read requests coming from the other CPU. Thus the configuration data can be determined by the processing device according to the identity (or the type) of the entity sending the request. Assuming that each CPU is linked to the interface component by its own dedicated channel (or bus), the interface component may enable or disable the double interleaved read mechanism according to the channel (or bus) through which the request reaches it.

Figure 2 shows a first example of data accesses in relation to cycles according to an embodiment of the invention.

In this example the processing device is a CPU.

At first cycle, the CPU requests the interface component 10 to read the data D1 in the memory 20 and the interface component performs a first memory access D1A in the memory to get the data D1.

At second cycle, the CPU requests the interface component 10 to read the data D2 in the memory 20 and the interface component performs a memory access D2A in the memory to get the data D2.

At third cycle, the interface component performs a second memory access D1B in the memory to get the data D1 a second time (and to perform the comparison). Thus the intermediate memory read operation D2A is executed between the two memory read operations D1A and D1B that target the data D1.

At fourth cycle, the interface component performs a new memory access D2B in the memory to get the data D2 a second time.

At fifth cycle, the CPU requests the interface component 10 to read the data D3 in the memory 20 and the interface component performs a first memory access D3A in the memory to get the data D3.

At sixth cycle, no request is sent by the CPU and no memory access is performed by the interface component.

At seventh cycle, the CPU requests the interface component 10 to read the data D4 in the memory 20 and the interface component performs a memory access D4A in the memory to get the data D4.

At eighth cycle, the interface component performs a new memory access D3B in the memory to get the data D3 a second time.

At ninth cycle, the interface component performs a new memory access D4B in the memory to get the data D4 a second time.

Preferably, the first read memory access is done as soon as the interface component receives a Read request from the CPU in order to speed-up the operating process and avoid stalling the processing device.

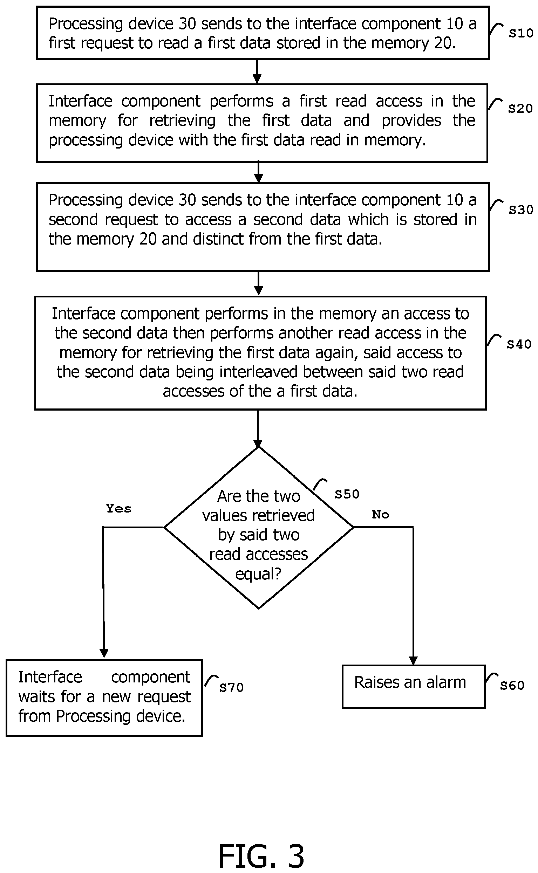

Figure 3 shows a flow diagram for accessing a memory according to a first example of the invention in which the double interleaved read is automatically activated.

By reference to the system 100 of Figure 1, the processing device 30 sends to the interface component 10 a first request to read a first data stored in the memory 20, at steps S10.

At step S20, the interface component performs a first read access in the memory for retrieving the first data and provides the processing device with the first data read in memory. Thus the processing device can use the retrieved first data for further treatments. The interface component temporary stores the value (of the first data) retrieved from the memory for a future comparison.

At step S30, the processing device 30 sends to the interface component 10 a second request to access a second data different from the first data which is stored in the memory 20 and distinct from the first data.

At step S40, the interface component performs in the memory an access to the second data then performs another read access in the memory for retrieving the first data again. The memory access to the second data is interleaved between the two memory read accesses of the first data.

At step S50, the interface component compares the newly retrieved value with the value previously stored for the same data.

If the two values are not equal, the interface component raises an alarm at step S60. The alarm can be caught by another component for applying security measures. For instance, the processing device may stop or further accesses to the memory can be denied by the interface component. Upon detection of an alarm, a hardware reset may be applied or executed software may go into mute mode.

If the two values are equal, no alarm is raised and the interface component waits for a new request from the processing device or continue its own processing at step S70.

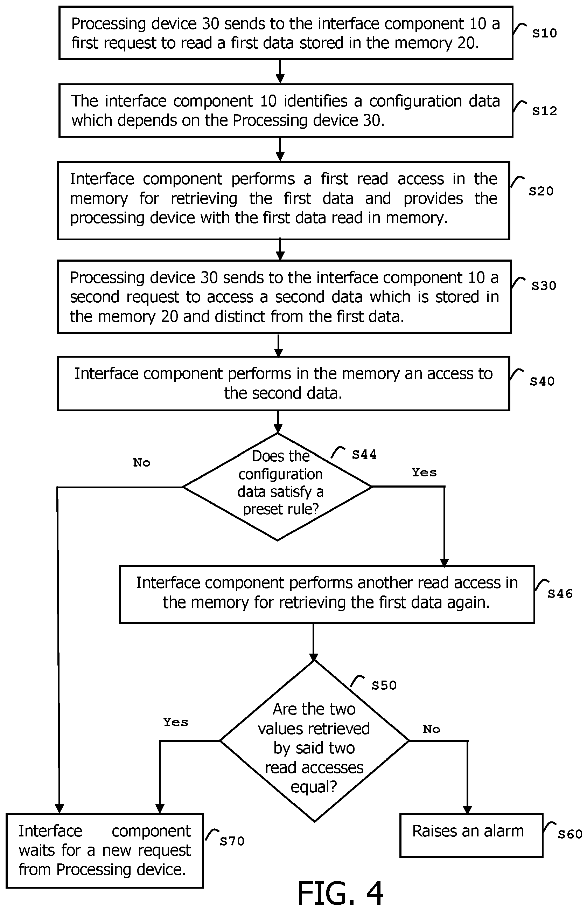

Figure 4 shows a flow diagram for accessing a memory according to a second example of the invention in which the double interleaved read is conditionally enabled.

By reference to the system 200 of Figure 5, the processing device 30 sends to the interface component 10 a first request to read a first data stored in the memory 20, at steps S10.

At step S12, the interface component identifies a configuration data which depends on the processing device 30. For instance, the processing device can provide the configuration data in the message comprising the request or the processing device can deduce the configuration data according to the communication channel/bus by which it receives the request. The interface component may store the configuration data associated with the first data in order to use it later. For instance the configuration data can be added in the storage area 15 with the pair corresponding to the first data.

At step S20, the interface component performs a first read access in the memory for retrieving the first data and provides the processing device with the first data read in memory. The interface component temporary stores the value (of the first data) retrieved from the memory for a possible future comparison.

At step S30, the processing device 30 sends to the interface component 10 a second request to access a second data different from the first data which is stored in the memory 20 and distinct from the first data.

At step S40, the interface component performs an access to the second data in the memory.

At step S44, the interface component checks if the configuration data satisfies a preset rule and makes a decision whether or not to activate the multi-read interleaved access to the memory 20. For instance, the interface component may activate the multi-read access if the request came from CPU-2 and may not activate the multi-read access if the request came from CPU-1.

In some embodiments, the multi memory access can be enabled/disabled according to the access type (e.g. native instruction, static data, executable data or Java® data).

The preset rule is assumed to have been pre-stored in the interface component.

If the interface component did not enable the multi-read access to the memory, the interface component waits for a new request from the processing device or continues its own processing at step S70.

If the interface component did enable the multi-read access to the memory (at step S44), the interface component performs another memory read access in the memory for retrieving the first data again at step S46. It is to be noted that the memory access to the second data is interleaved between the two memory read accesses of the first data.

Then the interface component compares the newly retrieved value with the value previously stored for the same data at step S50.

If the two values are not equal, the interface component raises an alarm at step S60.

If the two values are equal, the interface component waits for a new request from the processing device or continues its own processing at step S70.

Although the steps have been presented in a specific order at Figure 4, they may be performed in different orders providing a similar effect. For instance, steps S12 and S20 may be interchanged.

The second read memory access can be triggered after the interface component receives a third (or more) request from the processing device. In other words, several memory accesses can occur between the two read memory accesses performed for getting the same data.

Thanks to the invention, the two (or more) accesses to the memory for a same data are delayed from each other. This increases the chances of detection of a malicious action aiming at modifying values read from the memory. Thanks to the interleaved memory access, the invention enhances protection against attacks having a long fault effect.

The invention allows to enhance access to data stored in a memory without need to upgrade/modify the memory as such. The inventions can be implemented with conventional memories.

In some embodiments, the invention may apply to conventional processing devices without any change; only the interface component being adapted to implement the invention.

It must be understood, within the scope of the invention, that the above-described embodiments are provided as non-limitative examples. The invention is not limited to the described embodiments or examples. In particular, the invention is not limited to secure access to a single memory and may apply to systems comprising several memories. It is to be noted that the features described in the presented embodiments and examples may be combined.

## Claims

1. A method for securely accessing a memory (20), an interface component (10) being coupled to the memory and adapted to provide a processing device (30) with access to the memory, said method comprising a step in which the processing device sends to the interface component a request to read a first data stored in the memory,
**characterized in that** said method comprises the following steps:
- the interface component performs two identical read accesses in the memory for retrieving the first data and performs in the memory a third access to a second data distinct from the first data, said third access being interleaved between said two read accesses,
- the interface component compares the two values retrieved by said two read accesses and raises an alarm if said two values are different.

2. The method according to claim 1, wherein said third access is a read memory access or a write memory access.

3. The method according to claim 1, wherein said third access is a read access which is triggered by the receipt by the interface component of a second request sent by the processing device, said second request aiming at reading said second data stored in the memory.

4. The method according to claim 1, wherein the interface component performs in the memory a fourth access to a third data distinct from the first data, said fourth access being interleaved between said two read accesses.

5. The method according to claim 1, wherein the interface component comprises a storage area (15) and records in the storage area a pair comprising the address of the first data and the value retrieved by the first read access performed for getting said first data.

6. The method according to claim 5, wherein the storage area comprises several sequentially stored pairs and wherein, when the storage area becomes unable to store an additional pair, the interface component (10) automatically performs an access to the memory using the address comprised in the oldest pair, removes said oldest pair from the storage area and stores the additional pair in the storage area.

7. The method according to claim 5, wherein the storage area comprises several sequentially stored pairs and wherein, when the storage area becomes unable to store an additional pair, the interface component automatically removes the oldest pair from the storage area without accessing the memory a second time using the address comprised in said oldest pair and stores the additional pair in the storage area.

8. The method according to claim 1, wherein the interface component identifies a configuration data which depends on the processing device, wherein the interface component checks whether the configuration data satisfies a preset rule and wherein the interface component performs the step of two identical read accesses for retrieving the first data only if the configuration data satisfies the preset rule.

9. A device comprising a memory (20), a processing device (30) and an interface component (10) which is coupled to the memory and adapted to provide the processing device with access to the memory,
**characterized in that** upon receipt of a request to read a first data stored in the memory from the processing device, the interface component is adapted to perform two identical read accesses in the memory for retrieving the first data and to perform in the memory a third access to a second data distinct from the first data, said third access being interleaved between said two read accesses, and **in that** the interface component is adapted to compare the two values retrieved by said two read accesses and to raise an alarm if said two values are different.

10. The device according to claim 9, wherein said third access is a read access which is triggered by the receipt by the interface component of a second request sent by the processing device, said second request aiming at reading said second data stored in the memory.

11. The device according to claim 9, wherein the interface component comprises a storage area (15) and is adapted to record in the storage area a pair comprising the address of the first data and the value retrieved by the first read access performed to get the first data.

12. The device according to claim 11, wherein the storage area comprises several sequentially stored pairs and wherein, when the storage area becomes unable to store an additional pair, the interface component is adapted to automatically perform an access to the memory using the address comprised in the oldest pair, to remove said oldest pair from the storage area and to store the additional pair in the storage area.

13. The device according to claim 11, wherein the storage area comprises several sequentially stored pairs and wherein, when the storage area is unable to store an additional pair, the interface component is adapted to automatically remove the oldest pair from the storage area without accessing the memory a second time using the address comprised in said oldest pair and to store the additional pair in the storage area.

14. The device according to claim 9, wherein the interface component is configured to identify a configuration data which depends on the processing device, wherein the interface component is configured to check whether the configuration data satisfies a preset rule and wherein the interface component is configured to perform the two identical read accesses for retrieving the first data only if the configuration data satisfies the preset rule.

15. The device according to claim 9, wherein the processing device comprises several hardware components which are configured to access the memory through the interface component independently of each other.
